Europäisches Patentamt

European Patent Office

Office européen des brevets

(19)

(11) Numéro de publication: **0 209 473**
**A1**

## (12) DEMANDE DE BREVET EUROPEEN

(21) Numéro de dépôt: **86420176.9**

(22) Date de dépôt: **03.07.86**

(51) Int. Cl.⁴: **G 02 C 7/14**

(30) Priorité: **11.07.85 FR 8510837**

(43) Date de publication de la demande: **21.01.87**
**Bulletin 87/4**

(84) Etats contractants désignés: **BE CH DE GB IT LI**

(71) Demandeur: **Serres, Jacques, 112 avenue Charles de Gaulle, F-69160 Tassin la Demi Lune (FR)**

(72) Inventeur: **Serres, Jacques, 112 avenue Charles de Gaulle, F-69160 Tassin la Demi Lune (FR)**

(74) Mandataire: **Laurent, Michel et al, 20 rue Louis Chirpaz Boite Postale 32, F-69130 Lyon-Ecully (FR)**

(54) Prothèse optique permettant d'améliorer la vision d'une personne possédant un champ visuel restreint.

(57) Elle est constituée d'un ensemble de miroirs (1, 2, 3, 4) montés sur un support commun permettant de la positionner à proximité du bord scléro-cornéen de l'œil (ou des bords scléro-cornéens des deux yeux dans le cas de deux prothèses), ledit ensemble de miroirs constituant un système optique ouvert, chaque miroir respectant le stigmatisme rigoureux des images d'un miroir à un autre. Les miroirs sont montés sur un support (5, 6) pouvant recevoir un mouvement de translation et un mouvement de rotation.

- 1 -

## PROTHESE OPTIQUE PERMETTANT D'AMELIORER LA VISION D'UNE PERSONNE POSSEDANT UN CHAMP VISUEL RESTREINT.

La présente invention concerne une prothèse optique permettant d'améliorer la vision d'une personne possédant un champ visuel restreint ou diminué, résultant de causes accidentelles, pathologiques ou bien congénitales.

A ce jour, pour améliorer l'exploration de l'espace objet lorsque l'on possède un champ visuel restreint, aucune solution technique satisfaisante n'a été proposée si ce n'est d'utiliser des lentilles avec ouvertures de champ qui, malheureusement, ont comme inconvénients de diminuer fortement la taille des images ainsi que la clarté de l'instrument. De plus, une telle solution conduit à des ensembles encombrants et dont le poids du système optique est élevé.

Par ailleurs, l'application des miroirs pour améliorer le champ visuel dans l'espace objet est déjà connu dans les télescopes mais leurs caractéristiques instrumentales ne leur permettent pas de s'adapter à une monture d'optique médicale.

Dans le cas des jumelles à prismes, il a également été proposé d'utiliser quatre surfaces à réflexions totales. Cependant, les caractéristiques instrumentales d'une jumelle à prisme ne permettent pas d'adapter le prisme de la jumelle sur une monture d'optique médicale pour améliorer la vision d'une personne possédant un champ visuel restreint.

En outre, le système optique des périscopes utilise des surfaces à réflexions totales mais, de par leur conception, il n'est pas possible d'adapter un système optique de périscope sur la monture optique médicale d'un individu mal voyant pour améliorer la vision de son champ visuel.

Ainsi, si l'utilisation des surfaces à réflexions totales est bien connue de l'optique instrumentale et industrielle, il convient de noter, que dans le domaine de prothèse optique médicale, aucune solution satisfaisante n'a encore été réalisée à ce jour.

Or, on a trouvé, et c'est ce qui fait l'objet de la présente invention, une prothèse optique de conception particulièrement simple qui permet de résoudre ce problème et notamment donne la possibilité à l'oeil qui possède un champ visuel restreint d'effectuer de petits mouvements occulaires.

D'une manière générale, la prothèse optique conforme à l'invention se caractérise par le fait qu'elle est constituée d'un ensemble de miroirs montés sur un support commun permettant de la positionner à proximité du bord scléro-cornéen de l'oeil (ou des deux yeux dans le cas de deux prothèses), ledit ensemble de miroirs constituant un système optique ouvert, chaque miroir respectant le stigmatisme rigoureux des images d'un miroir à un autre.

Selon une forme préférentielle conforme à l'invention, ladite prothèse peut être ajustée devant l'oeil de l'utilisateur, l'ensemble de miroirs étant monté sur un support pouvant recevoir un mouvement de translation et un mouvement de rotation.

L'ensemble de miroirs est avantageusement constitué par quatre surfaces à réflexions totales dont la première appartient à un plan de l'espace faisant un angle de 45° avec l'axe de visée lui-même, perpendiculaire au plan objet observé. Les quatres miroirs constituant cette prothèse optique appartiennent à un même plan de l'espace mais ils sont perpendiculaires et parallèles entre eux, deux à deux.

Eventuellement, conformément à l'invention, il est possible de rajouter un verre correcteur avec ou sans prisme de petit angle à l'entrée du système située en regard du plan objet.

Un tel type de prothèse permet donc de voir l'image d'un objet éloigné à la périphérie du champ visuel fonctionnel ou en-dehors du champ visuel de l'oeil ou des yeux considérés par un simple petit mouvement occulaire en regardant le miroir le plus proche de l'oeil.

Les miroirs permettant de réaliser une prothèse conforme à l'invention peuvent être réalisés à partir de lames à faces parallèles de tout corps transparent, dont une des faces reçoit le dépôt d'un autre corps, ce qui permet de créer une surface à réflexion totale. Ces miroirs peuvent, suivant le procédé utilisé, appartenir à un même volume de matière transparente qui comporte huit faces ou plus ou bien à deux volumes de matière transparentes, qui dans les deux cas possèdent quatre faces à réflexion totale et dont la disposition de ces quatre faces miroitées est telle qu'elle représente un système optique ouvert.

Pour obtenir un volume de matière transparente avec les quatre faces miroitées constituant un système optique ouvert, on peut utiliser soit une opération par moulage, soit une opération par usinage et ensuite polissage, soit une opération d'estampage suivie d'une opération de dépôt d'un autre corps sur quatre de ces faces.

Les moyens permettant de régler la position de ladite prothèse devant l'oeil de l'utilisateur sont de préférence constitués par des systèmes de butée permettant d'immobiliser les miroirs après réglage de telle sorte que le premier miroir soit positionné à quelques millimètres du bord scléro-cornéen de l'oeil ou des bords scléro-cornéens des deux yeux dans le cas de deux prothèses.

L'invention et les avantages qu'elle apporte seront cependant mieux compris grâce aux exemples de réalisation de prothèses optiques conformes à l'invention qui seront donnés ci-après et qui sont illustrés par les schémas annexés dans lesquels :

- les figures 1a et 1b illustrent respectivement en vue de face et en vue de dessus un ensemble de deux miroirs entrant dans la réalisation d'une telle prothèse ;

- la figure 2a est une vue de dessus des quatre miroirs formant le système optique ouvert d'une telle prothèse ;

- la figure 2b est une vue de dessus montrant de manière simplifiée la position respective des miroirs et le cheminement optique des images conjuguées par lesdits miroirs ;

- les figures 3a et 3b sont respectivement des vues de face et de dessus de l'ensemble de quatre miroirs constituant le système optique ouvert associé aux moyens permettant de les maintenir dans une position déterminée les uns par rapport aux autres ;

- les figures 4a et 4b sont respectivement des vues de dessus et de face du système ouvert conforme à l'invention associé au support permettant de réaliser le mouvement de rotation nécessaire au réglage de ladite prothèse au regard de l'oeil ;

- les figures 5a, 5b et 5c sont des vues de dessus de face et de côté, illustrant la manière dont est effectué le mouvement de translation d'un tel système optique ;

- les figures 6a, 6b, 6c sont respectivement des vues de dessus, de face et de côté, d'une prothèse optique mobile conforme à l'invention fixée à une monture d'optique médicale ;

- les figures 7a, 7b, 7c sont des vues de dessus, de face et de côté d'une variante d'une prothèse conforme à l'invention comportant deux miroirs ;

- la figure 8 est une vue de dessus montrant d'une manière simplifiée la position respective des miroirs et le cheminement optique des images conjuguées par lesdits miroirs ;

    - la figure 9 est une vue en perspective détaillée d'une prothèse à deux miroirs du type illustré par les figures 7a, 7b, 7c et 8.

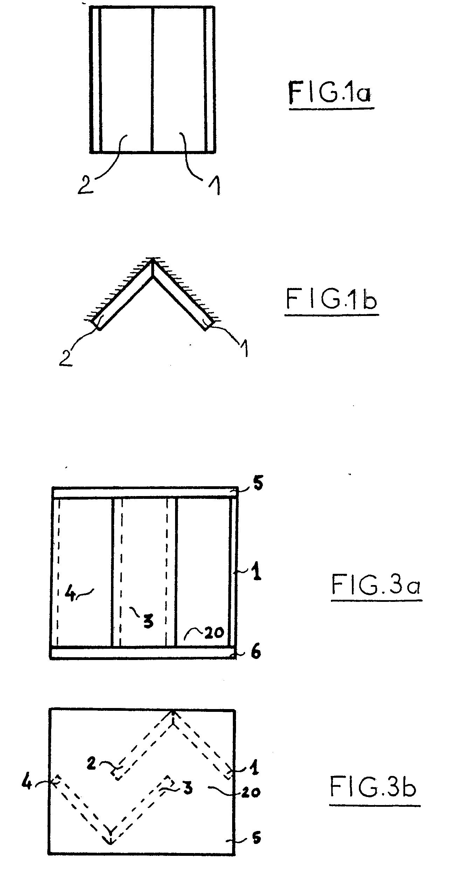

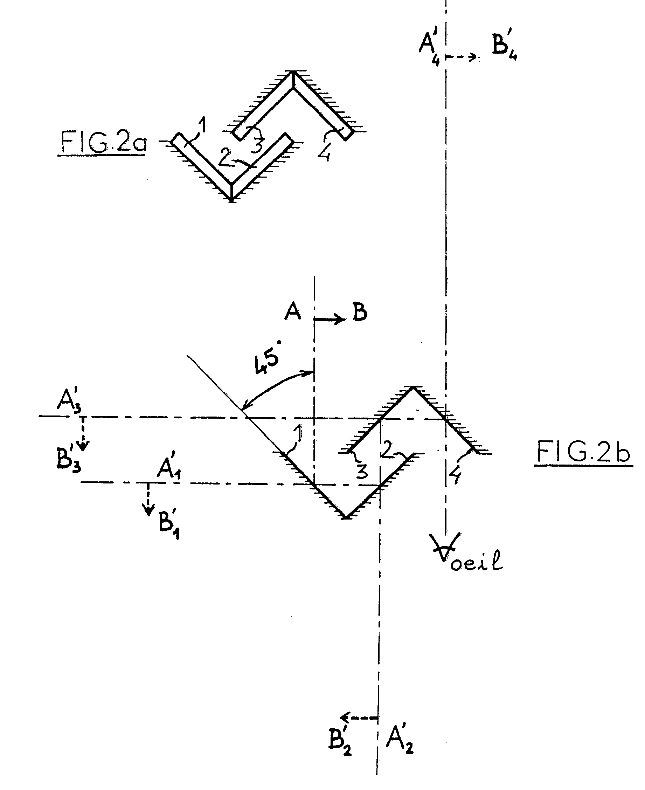

    Si l'on se reporte à la figure 2a , l'invention concerne donc une prothèse optique médicale constituée d'un ensemble de quatre miroirs permettant de faire cheminer l'image de tout objet suivant un chemin optique qui représente une rotation globale de 360° d'angle dans le même plan de l'espace pour un travail de rotation et de translation dans le même plan de l'espace (voir figure 2b).

    Une telle prothèse est constituée de quatre miroirs (1,2,3,4) (voir figure 2a à 3b) disposés suivant une orientation et un ordre bien précis.

    Chacun de ces miroirs est dans cet exemple de réalisation, constitué d'une lame à faces parallèles en verre minéral dont une des deux faces présente un dépôt d'argenture (partie hachurée aux figures) ou de tout corps dont la matière permet une réflexion totale de la surface utilisée. Dans le cas présent, le miroir présente une forme de quadrilatère et la lame de verre sur laquelle il repose possède trois chanfreins à 90° et un chanfrein à 45° d'angle qui permet l'assemblage d'une première lame miroitée de la manière représentée aux figures 1a et 1b.

    Si l'on se reporte aux schémas annexés, dans la partie optique de la prothèse conforme à l'invention, la disposition des faces réfléchissantes des miroirs est réalisée de manière bien précise. Un tel ensemble constitue un système optique ouvert respectant le stigmatisme rigoureux des images entre les miroirs (voir figure 2b). En effet, le plan de l'espace auquel appartient le premier miroir (référence 1 à la figure 2b) est disposé

- 6 -

de telle sorte qu'entre le plan du miroir et le plan auquel appartient l'axe de visée de l'oeil perpendiculaire au plan objet observé, on a un angle de 45°. En d'autres termes, il existe selon la conception de la prothèse conforme à l'invention un angle de 45° entre le plan de l'espace passant par l'objet et le plan de l'espace auquel appartient le premier miroir dudit dispositif.

La disposition du deuxième miroir (2) par rapport au premier (1) fait en sorte qu'il appartient à un même plan de l'espace et que les surfaces à réflexions totales sont en regard l'une de l'autre d'un angle de 90° et d'une façon jointive. La disposition du deuxième miroir (2) et du troisième miroir (3) est telle que les surfaces à réflexions totales appartiennent au même plan de l'espace mais en regard l'une de l'autre d'un angle qui est nul mais d'une façon non jointive.

La disposition du troisième miroir (3) par rapport au quatrième miroir (4) fait en sorte qu'ils appartiennent à un même plan de l'espace et que les surfaces à réflexions totales sont en regard l'une de l'autre d'un angle de 90° d'une façon jointive. La disposition du quatrième miroir (4) et du premier miroir (1) est telle que les surfaces à réflexions totales appartiennent au même plan de l'espace mais en regard l'une de l'autre d'un angle qui est nul mais d'une façon non jointive.

Si l'on se reporte aux figures 3a et 3b, il convient de noter qu'il existe un emplacement (20) à l'entrée du système optique en regard du plan objet pour éventuellement inserrer un verre correcteur avec ou sans prisme de petit angle par collage (ou similaire), aux lames support (5) et (6), en matière plastique par exemple, entre lesquelles sont montés les deux jeux de miroirs (1,2) et (3,4).

Ainsi que cela ressort des figures 3a et 3b, afin de réaliser un ensemble de quatre miroirs (1,2,3,4,) qui soient disposés de telle sorte qu'ils sont maintenus perpendiculaires et parallèles deux à deux, lesdits miroirs (1,2,3,4) sont assemblés, par collage par exemple, par les chanfreins des extrémités entre deux lames (5,6), en plastique par exemple, ayant une faible épaisseur de l'ordre de un à deux millimètres. Les deux supports plastiques (5,6) appartiennent donc à un plan de l'espace qui est perpendiculaire au plan de l'espace contenant le plan des miroirs.

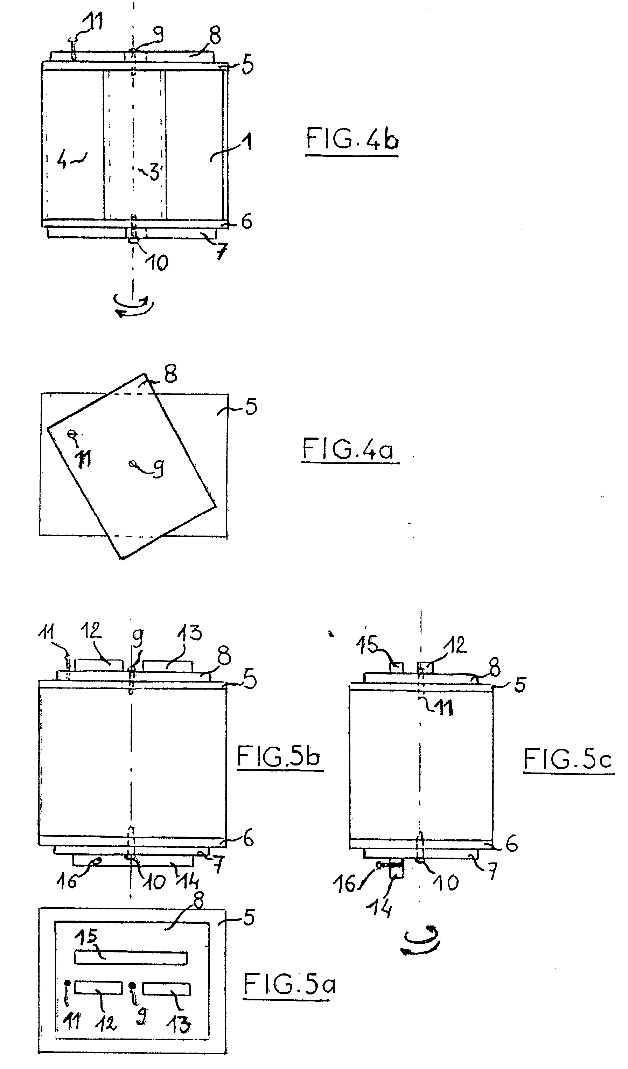

Les figures 4a à 6c illustrent la manière dont la prothèse optique à quatre miroirs peut être montée pour lui donner la possibilité d'avoir un mouvement de rotation et un mouvement de translation.

Le mouvement de rotation est obtenu en montant l'ensemble (1,2,3,4,5,6) entre deux plaques support (lames) à faces parallèles (7) et (8). Ces plaques peuvent être en matière plastique, telle que PVC par exemple. Pour réaliser le mouvement de rotation, on utilise un axe (9) qui relie les plaques (5,8) d'une extrémité du dispositif et un deuxième axe (10) qui relie les plaques (6,7) de la seconde extrémité du dispositif. Afin d'avoir une rotation libre du dispositif à quatre miroirs, les axes (9,10) situés à chaque extrémité sont alignés dans le prolongement l'un de l'autre. Par ailleurs, le contact entre les plaques (5,8) et (6,7) réalise un frottement doux entre les surfaces concernées. Le blocage en rotation est obtenu, après réglage, au moyen d'une vis pointeau (11) montée par exemple sur la plaque supérieure (8) et qui vient s'appuyer sur la plaque support (5).

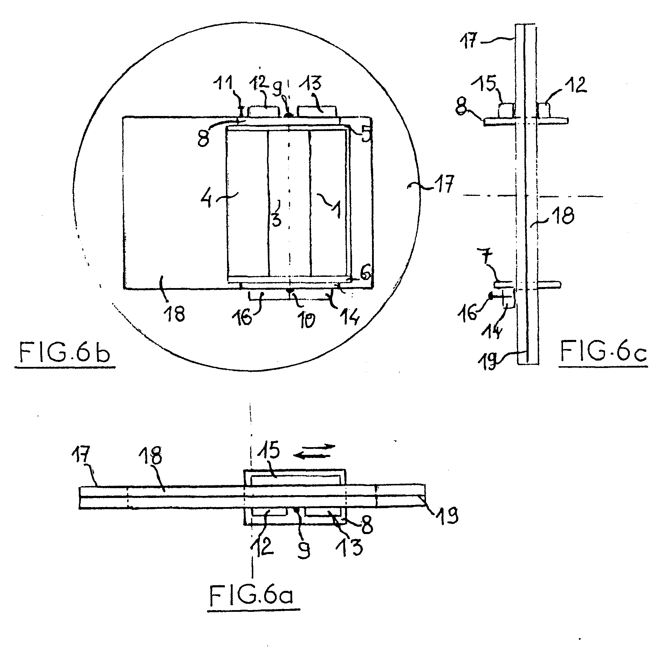

Le mouvement en translation de la prothèse est obtenu, ainsi que cela ressort des figures 5a à 5c, au moyen d'un ensemble de glissières (12,13,14,15) fixées sur chaque plaque externe. Les glissières sont réalisées dans tout matériau, par exemple en matière plastique également. Les glissières sont assemblées par collage aux plaques externes (8) et (7). Elles permettent au dispositif des translations à l'intérieur d'une fenêtre (18) (voir figure 6a à 6c), réalisées dans une pièce circulaire (17) en matière plastique. Cette pièce (17) a une épaisseur de l'ordre de quelques millimètres, quatre par exemple. Les dimensions rectangulaires ou carrées de la fenêtre (18) peuvent être variables et sera fonction des dimensions des miroirs utilisés et des plaques les supportant.

Le blocage en position de l'ensemble comportant les miroirs (1,2,3,4) à l'intérieur de la fenêtre (18) est réalisé par l'intermédiaire d'une vis pointeau (16) associée à l'une des glissières (14) et dont l'extrémité peut pénétrer dans la surface de la paroi (17) du bord de la fenêtre.

Un tel ensemble peut être fixé sur une monture d'optique médicale en prévoyant par exemple sur la périphérie du disque (17) permettant d'assurer le mouvement de translation du système, une rainure (19) permettant d'inserrer un fil (nylon par exemple) ou tout autre moyen équivalent de fixation utilisé de manière courante dans le domaine de l'optique.

Un tel type de prothèse de conception particulièrement simple donne entière satisfaction par le fait qu'il peut être adapté de manière précise en fonction de la morphologie des personnes présentant un champ visuel restreint ou diminué, le miroir (4) situé en regard de l'oeil de l'utilisateur pouvant être positionné à proximité immédiate de l'oeil de l'utilisateur qui peut donc, par le biais d'un simple petit mouvement occulaire, voir l'image d'un objet éloigné à la périphérie du champ visuel fonctionnel ou en-dehors du champ même de l'oeil.

Bien entendu, l'invention n'est pas limitée à l'exemple de réalisation décrit précédemment mais elle en couvre toutes les variantes réalisées dans le même esprit.

Ainsi, il pourrait être envisagé de réaliser l'ensemble optique conforme à l'invention non pas à partir de quatre miroirs, mais dans un ensemble monobloc réalisé dans un corps transparent dont les faces reçoivent de manière appropriée un dépôt permettant de créer des surfaces à réflexions totales dont la disposition est telle qu'elle représente un système optique ouvert, ou bien à partir de quatre miroirs mais dans un ensemble de deux blocs de matière transparente qui possèdent chacun deux miroirs et lesdits blocs une fois agencés permettent de réaliser un système optique ouvert à quatre surfaces à réflexions totales.

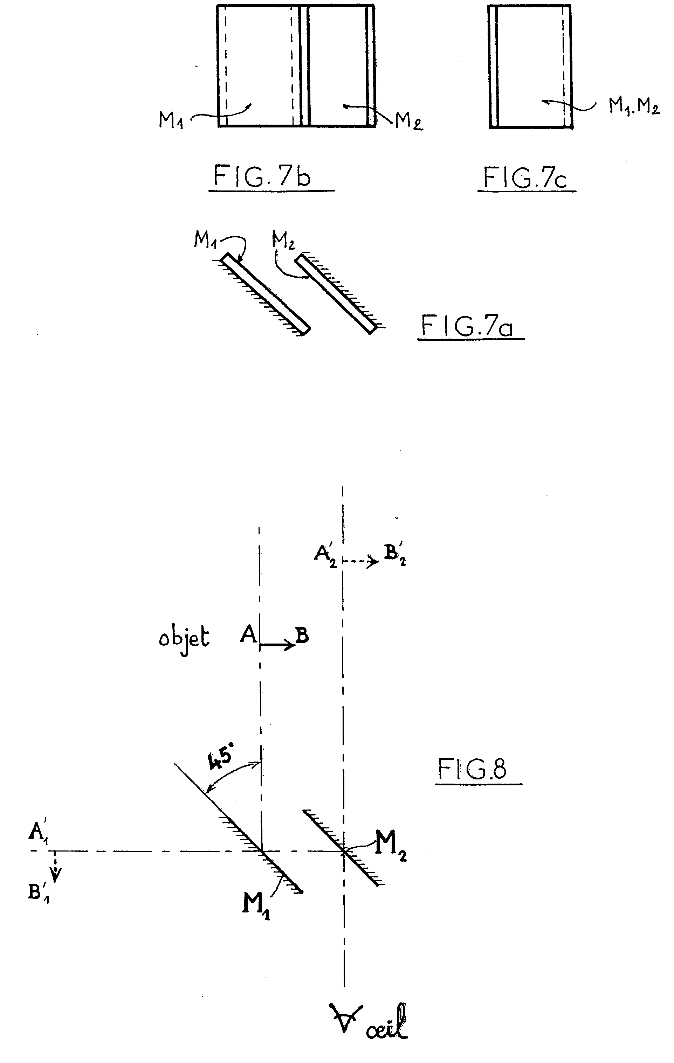

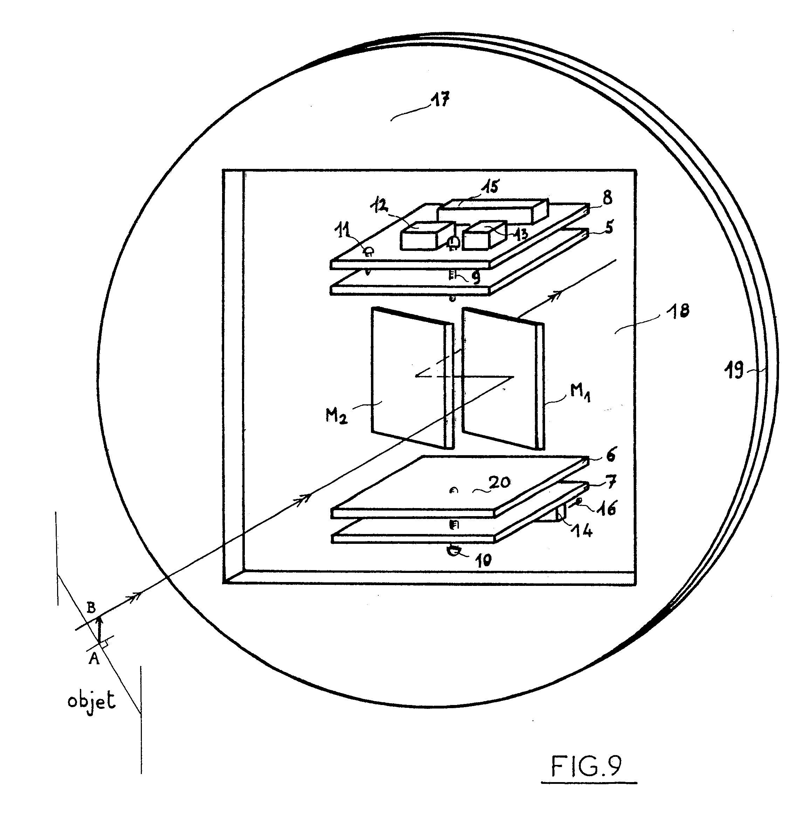

Les figures 7a, 7b, 7c, 8 et 9 illustrent une variante simplifiée comportant deux miroirs M1, M2 et qui permet d'obtenir les mêmes avantages que la solution décrite précédemment. Dans cette variante, les deux miroirs M1 et M2 constituent deux surfaces à réflexions totales dont la première appartient à un plan de l'espace faisant un angle de 45° avec l'axe de visée lui-même, perpendiculaire au plan objet observé (voir figure 8). Les deux miroirs M1-M2 qui constituent cette prothèse optique appartiennent à un même plan de l'espace mais ils sont parallèles et séparés l'un de l'autre d'une distance caractéristique. Cette distance se définit par la condition que les surfaces réfléchissantes soient parallèles sans chevauchement et sans séparation par rapport à un plan référentiel, ledit plan de l'espace formant un angle de 45° avec le plan de l'axe de visée lui-même perpendiculaire au plan objet (voir figure 8).

Ces deux miroirs M1-M2 sont montés d'une manière comparable à l'exemple de réalisation précédent à quatre miroirs. Un tel montage est illustré par la vue en perspective (figure 9) où les différents éléments servant au

- 10 -

montage, maintien et réglage ont été désignés par les mêmes références que dans l'exemple précédent de la réalisation à quatre miroirs. Par suite, par mesure de simplification, la structure d'une telle prothèse ne sera pas redécrite.

Comme précédemment, il est évident qu'il pourrait être envisagé de réaliser l'ensemble optique à cette variante simplifiée non pas à partir de deux miroirs mais dans un ensemble monobloc réalisé dans un corps transparent dont les faces reçoivent de manière appropriée un dépôt permettant de créer des surfaces à réflexions totales dont la disposition est telle qu'elle représente un système optique ouvert.

REVENDICATIONS

1/ Prothèse optique permettant d'améliorer la vision d'une personne possédant un champ visuel restreint, caractérisée par le fait qu'elle est constituée d'un ensemble de miroirs (1,2,3,4) monté sur un support commun permettant de la positionner à proximité du bord scléro-cornéen de l'oeil (ou des bords scléro-cornéens des deux yeux dans le cas de deux prothèses), ledit ensemble de miroirs constituant un système optique ouvert, chaque miroir respectant le stigmatisme rigoureux des images d'un miroir à un autre.

2/ Prothèse optique selon la revendication 1, caractérisée par le fait que l'ensemble de miroirs (1,2,3, 4) est monté sur un support (5,6) pouvant recevoir un mouvement de translation et un mouvement de rotation.

3/ Prothèse optique selon l'une des revendications 1 et 2, caractérisée par le fait que l'ensemble de miroirs est constitué de quatre surfaces (1,2,3,4) à réflexions totales dont la première (1) appartient à un plan de l'espace faisant un angle de 45° avec l'axe de visée lui-même perpendiculaire au plan objet observé, les quatre miroirs appartenant à un même plan de l'espace mais étant perpendiculaires et parallèles entre eux deux à deux.

4/ Prothèse optique selon l'une des revendications 1 et 2, caractérisée par le fait que l'ensemble de miroirs est constitué de deux surfaces à réflexions totales (M1) et (M2) dont la première (M1) appartient à un plan de l'espace faisant un angle de 45° avec l'axe de visée lui-même perpendiculaire au plan objet observé, les deux miroirs appartenant à un même plan de l'espace mais étant parallèles entre eux.

5/ Prothèse selon la revendication 4, caractérisée par le fait que les deux surfaces à réflexions totales (M1) et (M2) sont parallèles et se suivent sans chevau-

0209473

chement et sans séparation par rapport à un plan référentiel de l'espace et ledit plan de l'espace forme un angle de 45° avec le plan de l'axe de visée lui-même perpendiculaire au plan objet.

6/ Prothèse selon l'une des revendications 3 ou 4, caractérisée par le fait qu'un verre correcteur avec ou sans prisme de petit angle est disposé à l'entrée (20) du système situé en regard du plan objet.

7/ Prothèse selon l'une des revendications 1 à 6, caractérisée par le fait qu'elle comporte des moyens (vis pointeau 9,11) permettant de l'immobiliser après positionnement.

FIG.1a

2      1

FIG.1b

2      1

FIG.3a

5

4

3

20

1

6

FIG.3b

4    2    3    1
              20
              5

0209473

- 2 -

$A'_4 \dashrightarrow B'_4$

FIG.2a
1
2  3
4

A → B

45°

$A'_3$
$B'_3$
$A'_1$
1
2
3
4
$B'_1$

$\forall_{oeil}$

$B'_2 \dashleftarrow A'_2$

FIG.2b

0209473

FIG.4b

FIG.4a

FIG.5b

FIG.5c

FIG.5a

FIG.6b

FIG.6c

FIG.6a

- 5 -

0209473

$M_1$       $M_2$

FIG.7b

$M_1.M_2$

FIG.7c

$M_1$   $M_2$

FIG.7a

objet   $A \longrightarrow B$

$A_2' \dashrightarrow B_2'$

$A_1'$

$B_1'$

45°

$M_1$

$M_2$

FIG.8

œil

FIG.9

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 155 633 (J.J. BENAVIE) <br> * En entier * | 1,4 | G 02 C 7/14 |
| A | US-A-4 026 639 (D.G. LEBO) <br> * En entier * | 1,4 | |
| A | DE-A-3 305 444 (A. ADAM) <br> * En entier * | 1,4 | |

DOMAINES TECHNIQUES
RECHERCHES (Int. Cl.4)

G 02 C 7/14

Le présent rapport de recherche a été établi pour toutes les revendications

| Lieu de la recherche | Date d'achèvement de la recherche | Examinateur |
|---|---|---|
| LA HAYE | 10-10-1986 | CALLEWAERT-HAEZEBROU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82